# EUROPEAN PATENT APPLICATION

(11) **EP 4 180 915 A1**
(43) Date of publication of application: **17.05.2023**
(21) Application number: 21851142.6
(22) Date of filing: 15.05.2021
(51) Int. Cl.: G06F 1/26

(54) **SERVER POWER SUPPLY CIRCUIT AND SERVER**

(30) Priority: 28.07.2020 CN 202010738092
(71) Applicant: Huawei Technologies Co., Ltd., Shenzhen, Guangdong 518129 (CN)
(72) Inventor: LIU, Zao, Shenzhen, Guangdong 518129 (CN); YAO, Yimin, Shenzhen, Guangdong 518129 (CN); GAO, Junen, Shenzhen, Guangdong 518129 (CN); LI, Xiaochu, Shenzhen, Guangdong 518129 (CN)
(74) Representative: Maiwald GmbH
(86) International application number: PCT/CN2021/093976
(87) International publication number: WO 2022/022011

(57) **Abstract**

A server power supply circuit and a server are provided. In this application, the power supply circuit includes a first voltage input line, a second voltage input line, a ground cable, a switch module, and a voltage limiting module. One end of the first voltage input line and one end of the second voltage input line are separately configured to connect to a power supply. The switch module and the voltage limiting module are connected in series and located between the first voltage input line and the ground cable. When a voltage of the first voltage input line is greater than a conduction voltage, both the switch module and the voltage limiting module are in an on state, so that the server can be protected from a relatively high voltage. When the voltage of the first voltage input line decreases and is less than the conduction voltage after the voltage of the first voltage input line is greater than the conduction voltage, the voltage limiting module is in an off state. In this way, the power supply circuit can work normally and supply power to the server, so that the server is applicable to different power supply scenarios without switching a power supply module.

## Description

### TECHNICAL FIELD

This application relates to the field of communications technologies, and in particular, to a server power supply circuit and a server.

### BACKGROUND

Currently, a server needs to be applicable to a plurality of different power supply scenarios. A cabinet server is used as an example. In the cabinet server, one or more servers that can independently run are installed in a cabinet. In the cabinet server, power is supplied, in a same power supply manner, to the one or more installed servers that can independently run. A common power supply voltage is direct current +48 volts. The server in the cabinet server can also be taken out from the cabinet, and perform data operation as an independent server. After the server is taken out from the cabinet, power needs to be separately supplied to the server. In this case, a power supply voltage of the server is direct current -48 volts. A positive or negative sign of the power supply voltage indicates a direction of a voltage applied to the server.

To ensure that the server in the cabinet supports both the power supply voltage of +48 volts and the power supply voltage of-48 volts, two power supply modules need to be configured in the server. One power supply module is configured to support the power supply voltage of +48 volts, and the other power supply module is configured to support the power supply voltage of-48 volts. Different power supply modules are switched in different power supply scenarios.

In actual application, the power supply modules in the server need to be switched based on the power supply scenario. This is relatively inconvenient.

### SUMMARY

This application provides a server power supply circuit and a server, so that the server is applicable to different power supply scenarios without switching a power supply module.

According to a first aspect, an embodiment of this application provides a server power supply circuit. The power supply circuit includes a first voltage input line, a second voltage input line, a ground cable, a switch module, and a voltage limiting module, and one end of the first voltage input line and one end of the second voltage input line are separately configured to connect to a power supply. The switch module and the voltage limiting module are connected in series and located between the first voltage input line and the ground cable.

When a voltage of the first voltage input line is greater than a conduction voltage, both the switch module and the voltage limiting module are in an on state.

When the voltage of the first voltage input line decreases and is less than the conduction voltage after the voltage of the first voltage input line is greater than the conduction voltage, the voltage limiting module is in an off state.

According to the power supply circuit, when the voltage of the first voltage input line is greater than the conduction voltage, both the switch module and the voltage limiting module are in the on state, so that a server can be protected from a relatively high voltage. Then, if the voltage of the first voltage input line decreases and is less than the conduction voltage, the voltage limiting module can be in the off state in a timely manner, to ensure that the switch module is also in an off state, so that when the voltage of the first voltage input line is normal, the power supply circuit can work normally and supply power to the server.

In a possible design, when the voltage of the first voltage input line decreases and is less than the conduction voltage after the voltage of the first voltage input line is greater than the conduction voltage, the voltage limiting module can be in the off state before the switch module is in the off state. When the voltage limiting module is in the off state, the switch module is also in the off state because the switch module and the voltage limiting module are connected in series.

According to the power supply circuit, the voltage limiting module is first in the off state, to ensure that when the voltage of the first voltage input line is less than the conduction voltage, the first voltage input line and the ground cable are disconnected, so that the power supply circuit can return to normal in a timely manner.

In a possible design, a structure of the switch module is not limited in this application. For example, the switch module may include at least one discharge tube. A function of the switch module can be fulfilled by using a characteristic of the discharge tube.

In a possible design, if the switch module includes a plurality of discharge tubes, a connection manner of the plurality of discharge tubes is not limited in this embodiment of this application. For example, the plurality of discharge tubes may be connected in series. In this way, when one of the discharge tubes is faulty, other discharge tubes can work normally.

In a possible design, the voltage limiting module may be a circuit, a chip, and a component that have a detection function. The voltage limiting module can be in the off state in a timely manner after detecting that the voltage of the first voltage input line is less than the conduction voltage, to ensure that the power supply circuit can return to normal.

In a possible design, the voltage limiting module may also include at least one varistor. The varistor is sensitive to a voltage greater than the conduction voltage. When the voltage of the first voltage input line is greater than the conduction voltage, the varistor can be quickly in the on state, and when the voltage of the first voltage input line decreases and is less than the conduction voltage, the varistor can be in the off state in a relatively short time.

In a possible design, if the voltage limiting module includes a plurality of varistors, a connection manner of the plurality of varistors is not limited in this embodiment of this application. For example, the plurality of varistors may be connected in series. In this way, when one of the varistors is faulty, the other varistors can work normally.

In a possible design, the switch module and the voltage limiting module may be connected in series in either of the following two manners:

Manner 1: One end of the switch module is connected to the first voltage input line, the other end is connected to one end of the voltage limiting module, and the other end of the voltage limiting module is connected to the ground cable.

Manner 2: One end of the voltage limiting module is connected to the first voltage input line, the other end is connected to one end of the switch module, and the other end of the switch module is connected to the ground cable.

According to the power supply circuit, the switch module and the voltage limiting module are connected more flexibly, and the power supply circuit is applicable to different scenarios.

In a possible design, a voltage difference between the first voltage input line and the second voltage input line is +48 volts or -48 volts, to ensure that the power supply circuit is applicable to different power supply scenarios, and the server does not need to switch a power supply module in different power supply scenarios.

According to a second aspect, an embodiment of this application further provides a server. The server includes the power supply circuit provided in any one of the first aspect and the designs of the first aspect.

### BRIEF DESCRIPTION OF DRAWINGS

FIG. 1 is a schematic diagram of a structure of a power supply circuit;
FIG. 2A is a schematic diagram of a working status of a power supply circuit in a power supply scenario of-48 V;
FIG. 2B is a schematic diagram of a working status of a power supply circuit in a power supply scenario of +48 V;
FIG. 3 is a schematic diagram of a structure of a server power supply circuit according to this application;
FIG. 4A and FIG. 4B are a schematic diagram of a structure of a server power supply circuit according to this application;
FIG. 5A is a schematic diagram of a working status of a server power supply circuit in a power supply scenario of -48 V according to an embodiment of this application;
FIG. 5B is a schematic diagram of a working status of a server power supply circuit in a power supply scenario of +48 V according to an embodiment of this application;
FIG. 6 is a schematic diagram of a power supply module in a server according to this application; and
FIG. 7 is a schematic diagram of a structure of a server power supply circuit according to this application.

### DESCRIPTION OF EMBODIMENTS

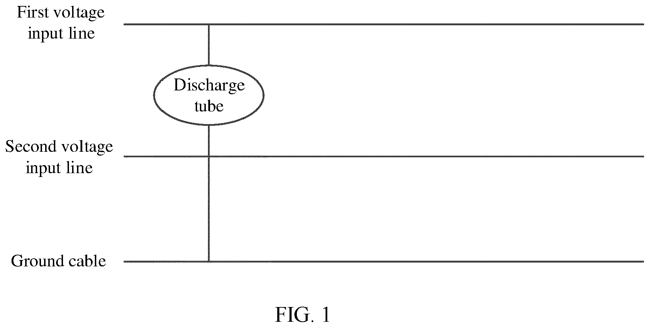

FIG. 1 is a schematic diagram of a power supply circuit in a server. The power supply circuit includes a first voltage input line, a second voltage input line, a ground cable, and a discharge tube. Optionally, the power supply circuit may further include another component, for example, a component with a circuit protection function, for example, a fuse.

One end of the first voltage input line and one end of the second voltage input line are separately connected to a power supply, and a value of a voltage input by the first voltage input line is greater than a value of a voltage input by the first voltage input line. In other words, there is a voltage difference between the first voltage input line and the second voltage input line. The power supply may supply power to components in the server by using the first voltage input line and the second voltage input line.

One end of the discharge tube is connected to the first voltage input line, and the other end of the discharge tube is connected to the ground cable. The discharge tube is a switching-type element. A conduction voltage is set for the discharge tube. The discharge tube is in an off state in a normal working state. When a voltage between both ends of the discharge tube is greater than the conduction voltage of the discharge tube, the discharge tube is in an on state. If the voltage between both ends of the discharge tube decreases to a voltage threshold after the discharge tube is in the on state, the discharge tube is restored to the off state.

The following uses an example in which the conduction voltage of the discharge tube is 70 V and the voltage threshold is 10 V to separately describe working statuses of the power supply circuit when power supply voltages provided by the power supply are -48 volts (V) and +48 volts (V).

### (1) The power supply voltage provided by the power supply is -48 V

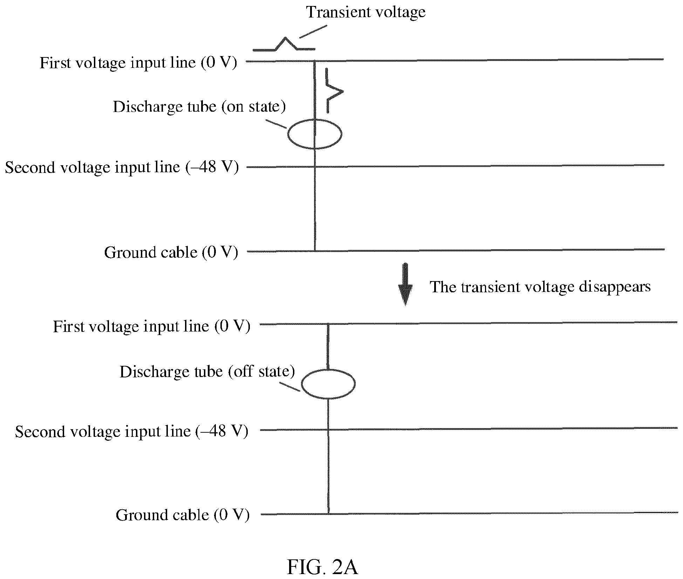

Refer to FIG. 2A. The value of the voltage input by the first voltage input line is 0 V, and the value of the voltage input by the second voltage input line is -48 V Because the value of the voltage input by the first voltage input line is 0 V, and a value of a voltage of the ground cable is also 0 V, a voltage difference between the first voltage input line and the ground cable is 0 V, the discharge tube is in the off state, the first voltage input line and the ground cable are disconnected, and the power supply circuit can work normally.

When the first voltage input line inputs a transient voltage, if the transient voltage is greater than the conduction voltage of the discharge tube, the discharge tube is in the on state, the first voltage input line and the ground cable are connected, and the power supply circuit stops working, to ensure that the server is protected from the transient voltage, thereby protecting the server. After the transient voltage disappears, the voltage between both ends of the discharge tube changes to 0 V, the discharge tube is in the off state, the first voltage input line and the ground cable are no longer connected, and the power supply circuit works normally.

In this case, the discharge tube is in the off state after the transient voltage disappears, to ensure that the first voltage input line and the ground cable are disconnected, and the power supply circuit can work normally and can supply power to the server.

In an actual application, the transient voltage exists in many scenarios, for example, when the first voltage input line and the second voltage input line are being plugged into/unplugged from the power supply, or when the power supply suddenly stops supplying power. For another example, when the server is in a lightning environment, the first voltage input line may input the transient voltage under the action of lightning (in other words, the discharge tube may be used for lightning protection of the server).

### (2) The power supply voltage provided by the power supply is +48 V

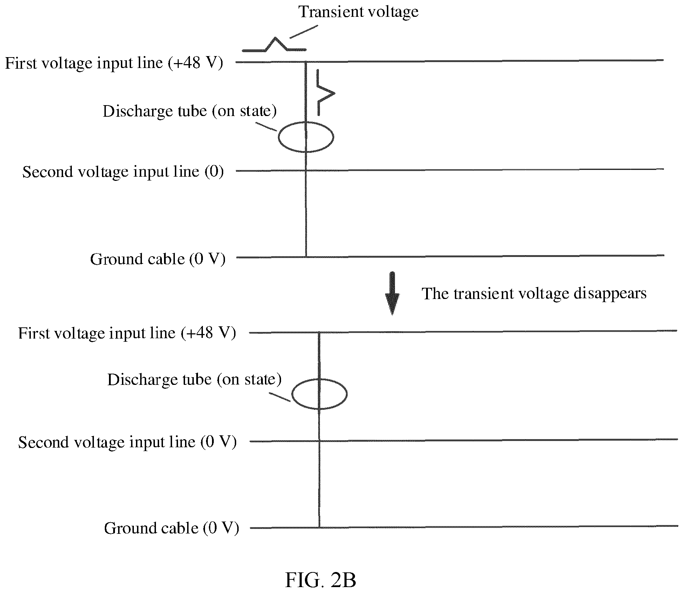

Refer to FIG. 2B. The value of the voltage input by the first voltage input line is +48 V, and the value of the voltage input by the second voltage input line is 0 V Because the value of the voltage input by the first voltage input line is +48 V, and a value of a voltage of the ground cable is 0 V, a voltage difference between the first voltage input line and the ground cable is 48 V, and is less than the conduction voltage of the discharge tube, the discharge tube is in the off state, the first voltage input line and the ground cable are disconnected, and the power supply circuit can work normally.

When the first voltage input line inputs a transient voltage, if the transient voltage is greater than the conduction voltage of the discharge tube, the discharge tube is in the on state, the first voltage input line and the ground cable are connected, and the power supply circuit stops working. After the transient voltage disappears, the voltage between both ends of the discharge tube remains at 48 V, and is greater than the voltage threshold (10 V), the discharge tube is in the on state, the first voltage input line and the ground cable are still connected, and the power supply circuit cannot work normally.

In this case, because the discharge tube is disposed, the server cannot be applied to the power supply scenario of +48 V To ensure that the server can support the power supply scenario of +48 V, the discharge tube needs to be removed. However, after the discharge tube is removed, the power supply circuit cannot prevent a relatively high transient voltage, and safety of the power supply circuit is relatively poor. Therefore, to ensure that the server can still prevent the transient voltage in the power supply scenario of +48 V, the power supply circuit needs to be redesigned.

In this case, different power supply circuits need to be configured for the server in the power supply scenarios of +48 V and -48 V, and corresponding power supply circuits need to be used through switching in different power supply scenarios. This is relatively inconvenient, and configuration of different power supply circuits undoubtedly increases costs.

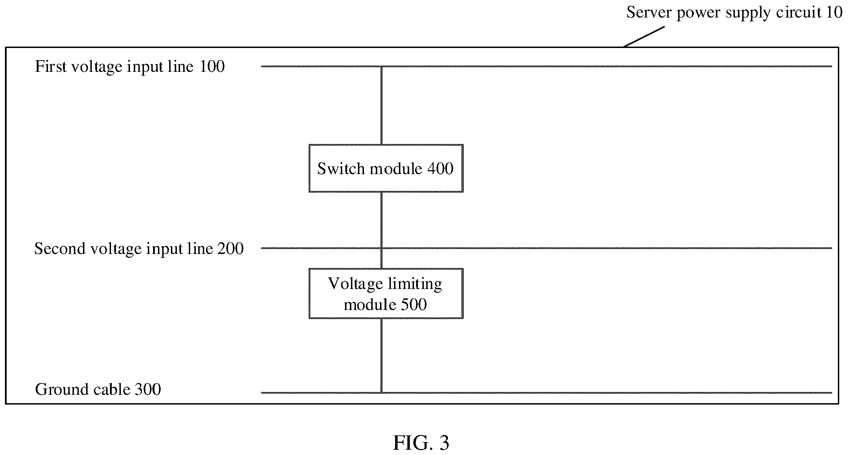

Therefore, an embodiment of this application provides a server power supply circuit. Refer to FIG. 3. In this application, the power supply circuit includes a first voltage input line 100, a second voltage input line 200, a ground cable 300, a switch module 400, and a voltage limiting module 500.

One end of the first voltage input line 100 and one end of the second voltage input line 200 are separately connected to a power supply. For example, in a power supply scenario of +48 V, a voltage of the first voltage input line 100 may be +48 V, and a voltage of the second voltage input line 200 may be 0 V For another example, in a power supply scenario of -48 V, a voltage of the first voltage input line 100 may be 0 V, and a voltage of the second voltage input line 200 may be -48 V

The switch module 400 and the voltage limiting module 500 are connected in series and located between the first voltage input line 100 and the ground cable 300.

A connection sequence between the switch module 400 and the voltage limiting module 500 is not limited in this embodiment of this application. For example, one end of the switch module 400 may be connected to the first voltage input line 100, the other end is connected to one end of the voltage limiting module 500, and the other end of the voltage limiting module 500 is connected to the ground cable 300, as shown in FIG. 3. For another example, one end of the switch module 400 may be connected to the ground cable 300, the other end is connected to one end of the voltage limiting module 500, and the other end of the voltage limiting module 500 is connected to the first voltage input line 100.

The switch module 400 and the voltage limiting module 500 remain in an off state when working normally.

When the voltage of the first voltage input line 100 is greater than a conduction voltage, both the switch module 400 and the voltage limiting module 500 are in an on state.

When the voltage of the first voltage input line 100 decreases and is less than the conduction voltage after the voltage of the first voltage input line 100 is greater than the conduction voltage, the voltage limiting module 500 is in the off state. When the voltage limiting module 500 is in the off state, because the voltage limiting module 500 and the switch module 400 are connected in series, a voltage between both ends of the switch module 400 changes to zero, and the switch module 400 is also in the off state. The conduction voltage is determined based on characteristics of the switch module 400 and the voltage limiting module 500.

According to the server power supply circuit 10, when the voltage of the first voltage input line 100 is greater than the conduction voltage, the switch module 400 and the voltage limiting module 500 can be in the on state, so that the server is protected from a relatively high conduction voltage, thereby protecting the server. After the voltage of the first voltage input line 100 decreases and is less than the conduction voltage, the voltage limiting module 500 is in the off state in a timely manner. When the voltage limiting module 500 is in the off state, the switch module 400 can also be in the off state in a timely manner because the voltage between both ends of the switch module 400 changes to zero, so that the first voltage input line 100 and the ground cable 300 are disconnected, and the server power supply circuit 10 can work normally. In this way, regardless of a power supply scenario of the server, the server power supply circuit 10 can work normally, and the server does not need to use different power supply modules in different power supply scenarios.

Compositions of the switch module 400 and the voltage limiting module 500 are not limited in this embodiment of this application. For the switch module 400, any module that can be in the on state when the voltage of the first voltage input line 100 is greater than the conduction voltage is applicable to this embodiment of this application. For the voltage limiting module 500, any module that can be in the on state when the voltage of the first voltage input line 100 is greater than the conduction voltage and that can be in the off state when the voltage of the first voltage input line 100 is less than the conduction voltage is applicable to this embodiment of this application.

In the server power supply circuit 10 shown in FIG. 3, when the voltage of the first voltage input line 100 decreases and is less than the conduction voltage, the voltage limiting module 500 may be in the off state before the switch module 400. In this way, the voltage between both ends of the switch module 400 decreases to zero, and then is also in the off state.

In this case, the voltage limiting module 500 is more sensitive to a voltage than the switch module 400, and can be in the off state in a timely manner after the voltage of the first voltage input line 100 is less than the conduction voltage.

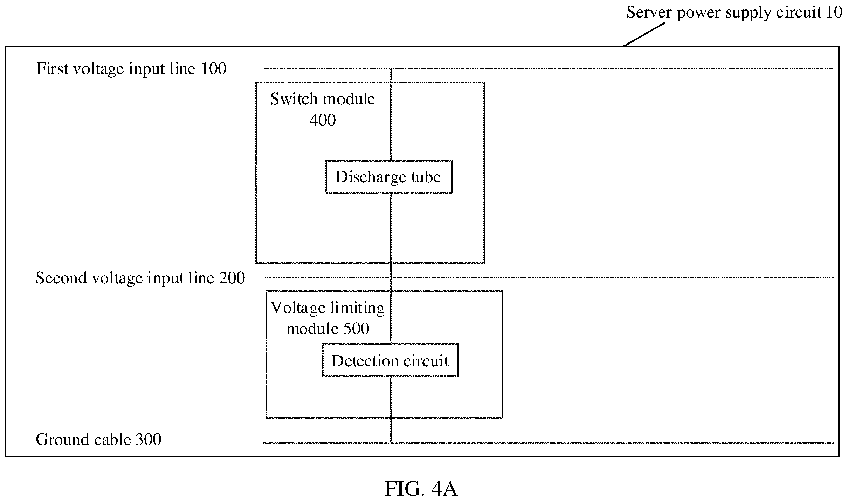

As shown in FIG. 4A, the switch module 400 may be a module in an existing power supply circuit 10 that is configured to protect the server power supply circuit 10. For example, the switch module 400 may include a discharge tube.

A quantity of discharge tubes in the switch module 400 is not limited in this embodiment of this application. There may be one or more discharge tubes. When the switch module 400 includes a plurality of discharge tubes, the plurality of discharge tubes may be connected in series, and the plurality of discharge tubes connected in series are used as the switch module 400. When one of the discharge tubes is faulty, for example, when a voltage between both ends of the discharge tube is less than a voltage threshold, the discharge tube is still in the on state, and the other discharge tubes can still function normally, so that the switch module 400 can protect the entire server power supply circuit 10.

The voltage limiting module 500 may be a circuit, a chip, a module including a logical component, or the like that has a detection function. The voltage limiting module 500 is in the off state after detecting that the voltage of the first voltage input line 100 is less than the conduction voltage.

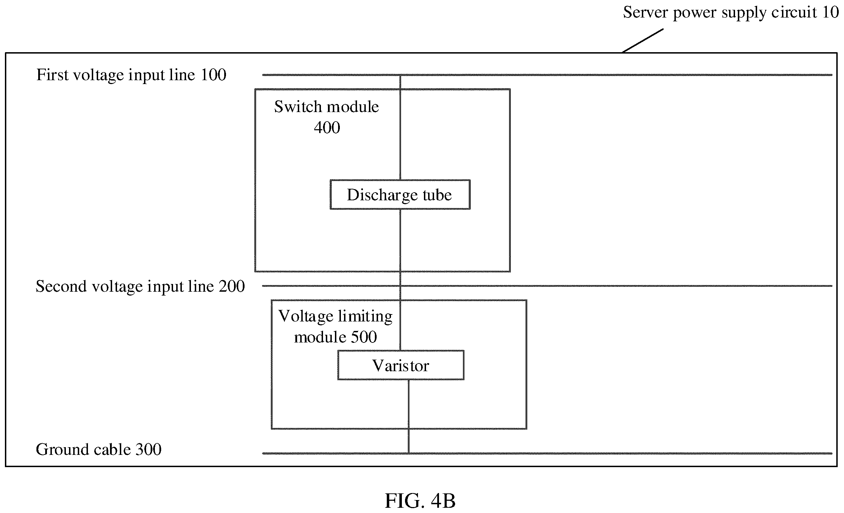

FIG. 4B shows another server power supply circuit 10 according to an embodiment of this application. In the server power supply circuit 10, a voltage limiting module 500 may include a varistor, and the varistor is a voltage limiting type protection component. A working principle of the varistor is similar to that of a discharge tube. When a voltage between both ends of the varistor is less than a conduction voltage, a current flowing through the varistor is quite small. In this case, the varistor is equivalent to a resistor with an infinitely large resistance, in other words, the varistor is in an off state. When the voltage between both ends of the varistor is greater than the conduction voltage, the current flowing through the varistor increases rapidly. In this case, the varistor is equivalent to a resistor with an infinitely small resistance, in other words, the varistor is in an on state.

Although the principle of the varistor is similar to that of the discharge tube, a response speed of the varistor is higher than that of the discharge tube. When the voltage between both ends of the varistor is less than the conduction voltage, the varistor may be in the off state relatively quickly. If a switch module 400 is a discharge tube, because the varistor connected in series to the switch module 400 is in the off state, a voltage between both ends of the discharge tube is zero, and the discharge tube is also in the off state.

It should be noted that the varistor has a voltage threshold, and the voltage threshold is usually relatively high. When the voltage between both ends of the varistor is less than the voltage threshold, the varistor is in the off state. When the voltage between both ends of the varistor is greater than the voltage threshold, the varistor is in the on state. The voltage threshold of the varistor is greater than a voltage threshold of the discharge tube. For example, the voltage threshold of the varistor is greater than 48 V, and may be a value greater than 48 V

A specific value of the conduction voltage is not limited in this embodiment of this application, and the conduction voltage is less than the voltage threshold of the varistor.

A quantity of varistors in the voltage limiting module 500 is not limited in this embodiment of this application. There may be one or more varistors. When the voltage limiting module 500 includes a plurality of varistors, the plurality of varistors may be connected in series. When one of the varistors is faulty, for example, when a voltage between both ends of the varistor is less than a voltage threshold, the varistor is still in the on state, and the other varistors can still function normally, to ensure that the voltage limiting module 500 can be in the off state in a timely manner when a voltage between both ends of the voltage limiting module 500 is less than the conduction voltage.

In the foregoing descriptions, a composition of the voltage limiting module 500 is merely an example. In addition, the voltage limiting module 500 may further include another component. For example, the voltage limiting module 500 may be a transient voltage suppressor (transient voltage suppressor).

The following separately describes working statuses of a server power supply circuit 10 provided in embodiments of this application in power supply scenarios of -48 V and +48 V An example in which a switch module 400 is a discharge tube and a voltage limiting module 500 is a varistor is used for description herein.

### (1) Power supply scenario of-48 V

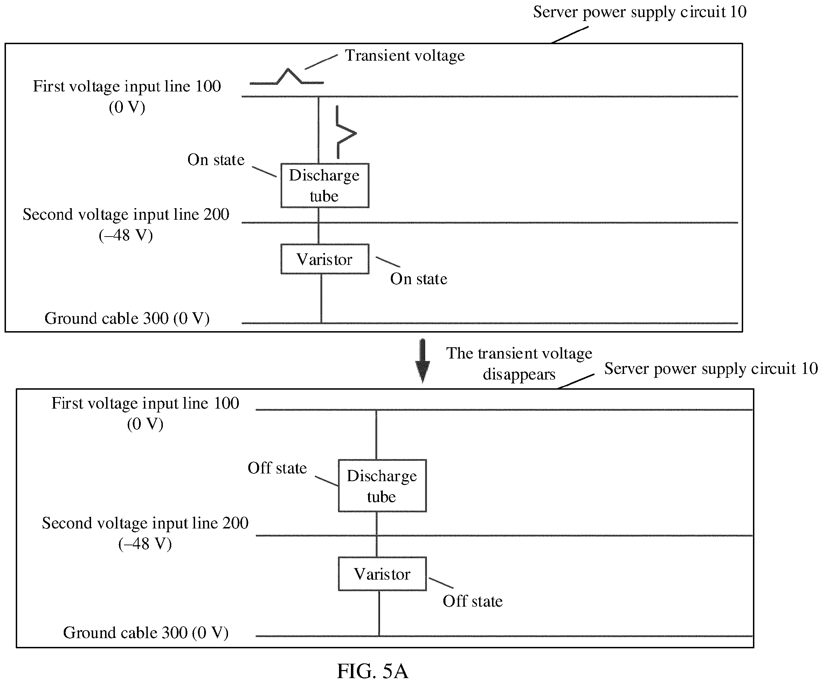

FIG. 5A shows a server power supply circuit 10 according to an embodiment of this application. A value of a voltage input by a first voltage input line 100 is 0 V, and a value of a voltage input by a second voltage input line 200 is -48 V Because the value of the voltage input by the first voltage input line 100 is 0 V, and a value of a voltage of a ground cable 300 is also 0 V, a voltage difference between the first voltage input line 100 and the ground cable 300 is 0 V, a discharge tube is in an off state, the first voltage input line 100 and the ground cable 300 are disconnected, and the server power supply circuit 10 can work normally.

When the first voltage input line 100 inputs a transient voltage, if the transient voltage is greater than a conduction voltage, the discharge tube and a varistor are in an on state, the first voltage input line 100 and the ground cable 300 are connected, and the server power supply circuit 10 stops working, to ensure that a server is protected from the transient voltage, thereby protecting the server. After the transient voltage disappears, a voltage between both ends of each of the discharge tube and the varistor changes to 0 V, both the discharge tube and the varistor are in the off state, the first voltage input line 100 and the ground cable 300 are no longer connected, and the server power supply circuit 10 works normally.

In this case, both the discharge tube and the varistor can be in the off state after the transient voltage disappears, to ensure that the first voltage input line 100 and the ground cable 300 are disconnected, and the server power supply circuit 10 can work normally and can supply power to the server.

### (2) Power supply scenario of +48 V

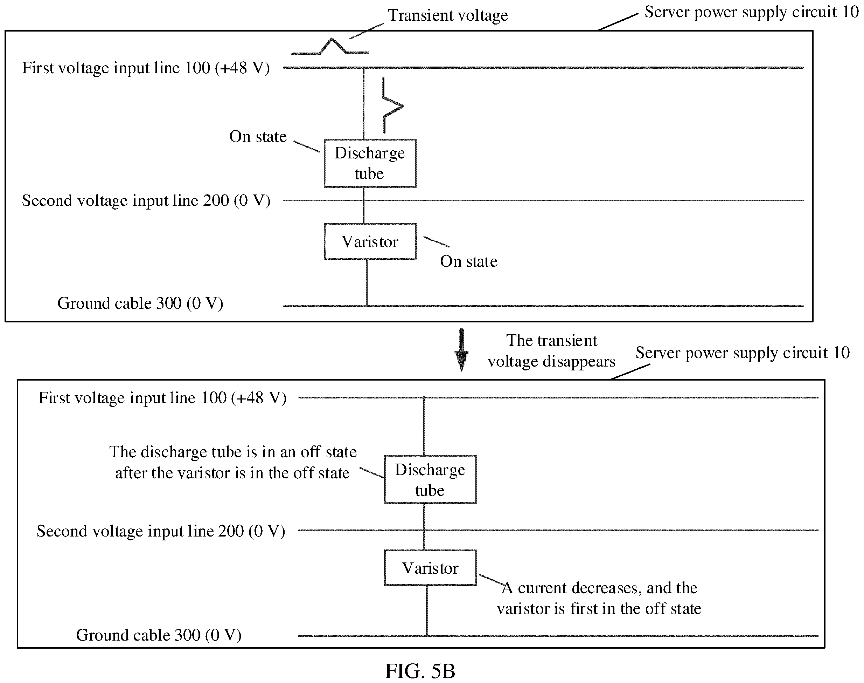

FIG. 5B shows a server power supply circuit 10 according to an embodiment of this application. A value of a voltage input by a first voltage input line 100 is +48 V, and a value of a voltage input by a second voltage input line 200 is 0 V Because the value of the voltage input by the first voltage input line 100 is +48 V, and a value of a voltage of a ground cable 300 is 0 V, a voltage difference between the first voltage input line 100 and the ground cable 300 is 48 V, and is less than a conduction voltage, a discharge tube and a varistor are in an off state, the first voltage input line 100 and the ground cable 300 are disconnected, and the power supply circuit 10 can work normally.

When the first voltage input line 100 inputs a transient voltage, if the transient voltage is greater than the conduction voltage, the discharge tube and the varistor are in an on state, the first voltage input line 100 and the ground cable 300 are connected, and the power supply circuit 10 stops working. After the transient voltage disappears, a current flowing through the varistor becomes smaller, a resistance of the varistor increases, and the varistor is in the off state. Because the discharge tube and the varistor are connected in series, a voltage between both ends of the discharge tube also changes to zero, and the discharge tube is in the off state. Therefore, the first voltage input line 100 and the ground cable 300 are no longer connected, and the server power supply circuit 10 works normally.

It can be learned from the foregoing descriptions that the server power supply circuit 10 provided in embodiments of this application is applicable to different power supply scenarios.

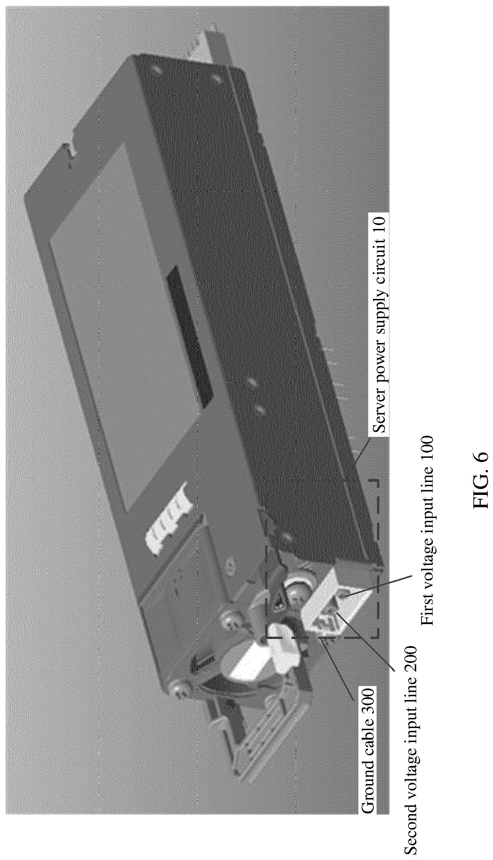

FIG. 6 is a schematic diagram of a power supply module in a server according to an embodiment of this application. The power supply module in the server includes the foregoing server power supply circuit 10. For a location of the server power supply circuit 10, refer to a location of a dotted-line box in the figure.

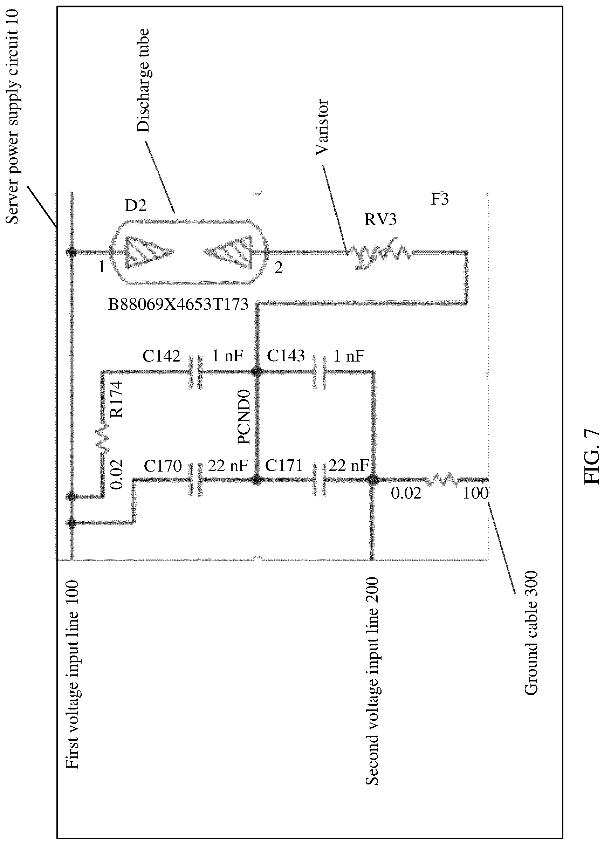

FIG. 7 shows another server power supply circuit 10 according to an embodiment of this application. The server power supply circuit 10 includes a first voltage input line 100, a second voltage input line 200, a ground cable 300, a discharge tube, and a varistor. The discharge tube and the varistor are connected in series between the first voltage input line 100 and the ground cable 300. The server power supply circuit 10 may further include another component, for example, a capacitor or a fuse.

A person skilled in the art can make various modifications and variations to this application without departing from the scope of this application. In this way, this application is intended to cover these modifications and variations of this application provided that they fall within the scope of the claims of this application and their equivalent technologies.

## Claims

1. A server power supply circuit, wherein the power supply circuit comprises a first voltage input line, a second voltage input line, a ground cable, a switch module, and a voltage limiting module, and one end of the first voltage input line and one end of the second voltage input line are separately configured to connect to a power supply;
the switch module and the voltage limiting module are connected in series between the first voltage input line and the ground cable;
when a voltage of the first voltage input line is greater than a conduction voltage, both the switch module and the voltage limiting module are in an on state; and
when the voltage of the first voltage input line decreases and is less than the conduction voltage after the voltage of the first voltage input line is greater than the conduction voltage, the voltage limiting module is in an off state.

2. The power supply circuit according to claim 1, wherein when the voltage of the first voltage input line decreases and is less than the conduction voltage after the voltage of the first voltage input line is greater than the conduction voltage, the voltage limiting module is in an off state before the switch module is in the off state.

3. The power supply circuit according to claim 1 or 2, wherein the switch module comprises at least one discharge tube.

4. The power supply circuit according to claim 3, wherein if the switch module comprises a plurality of discharge tubes, the plurality of discharge tubes are connected in series.

5. The power supply circuit according to any one of claims 1 to 4, wherein the voltage limiting module is in the off state after detecting that the voltage of the first voltage input line is less than the conduction voltage.

6. The power supply circuit according to any one of claims 1 to 4, wherein the voltage limiting module comprises at least one varistor.

7. The power supply circuit according to claim 6, wherein if the voltage limiting module comprises a plurality of varistors, the plurality of varistors are connected in series.

8. The power supply circuit according to any one of claims 1 to 7, wherein that the switch module and the voltage limiting module are connected in series between the first voltage input line and the ground cable specifically comprises:
one end of the switch module is connected to the first voltage input line, the other end is connected to one end of the voltage limiting module, and the other end of the voltage limiting module is connected to the ground cable; or
one end of the voltage limiting module is connected to the first voltage input line, the other end is connected to one end of the switch module, and the other end of the switch module is connected to the ground cable.

9. The power supply circuit according to any one of claims 1 to 8, wherein a voltage difference between the first voltage input line and the second voltage input line is +48 volts or -48 volts.

10. A server, wherein the server comprises the power supply circuit according to any one of claims 1 to 9.
